# EUROPEAN PATENT SPECIFICATION

(11) **EP 4 075 833 B1**
(45) Date of publication and mention of the grant of the patent: **11.09.2024**
(21) Application number: 22154910.8
(22) Date of filing: 03.02.2022
(51) Int. Cl.: H04W 4/029, H04W 4/42, H04W 4/44, H04W 4/80

(54) **A METHOD FOR MANAGING MULTI-MODE TRANSPORT OF A USER, A SERVER, AND A SYSTEM THEREOF**
VERFAHREN ZUR VERWALTUNG DES MULTIMODALEN TRANSPORTS EINES BENUTZERS, SERVER UND SYSTEM DAFÜR
PROCÉDÉ DE GESTION DE TRANSPORT MULTIMODE D'UN UTILISATEUR, SERVEUR, ET SYSTÈME ASSOCIÉ

(30) Priority: 16.04.2021 IN 202141017748
(43) Date of publication of application: 19.10.2022
(73) Proprietor: Hitachi, Ltd., Tokyo 100-8280 (JP)
(72) Inventor: SHARMA, Ankit, 560055 Rajajinagar (IN); SEKIGUCHI, Tomonori, Chiyoda-ku, 100-8280 (JP)
(74) Representative: Mewburn Ellis LLP

(56) References cited:
- EP-A1- 3 910 925
- JP-A- 2020 113 014
- US-A1- 2020 210 979

## Description

### TECHNICAL FIELD

The present disclosure generally relates to Mobility-as-a-Service (MaaS) systems. More particularly, the present disclosure relates to a method, a server, and a system for managing multi-mode transport of a user.

### BACKGROUND

Currently cities are growing rapidly. With growing cities, mobility of users from one place to another place is also increasing. Users take several modes of public transport for their journey from one place to another place. For example, the users may use a bus, a train, multiple buses, and the like to complete their journey. However, it is not possible for the users to board different modes of transport with a single ticketing system. Transport facilities associated with different modes of the transport have different fares and ticketing systems. The users have to make payment for different modes of transport differently based on the fares and the ticketing systems. Hence, user convenience is reduced.

Conventional systems for managing multi-mode transport of the users comprises generating a Quick response (QR) code indicating a payment made by a user for the multi-mode transport. However, the conventional systems depend on predefined details such as route of the user, modes of transport associated with the route, a sequence of the modes, and the like. The user performs the payment in advance for his/her journey. The users use the QR codes generated in advance to gain entry and exit to the transport facilities. In such systems, the route of the user is fixed. The user has to conform to the fixed route which constraints the user. Further, the QR code are valid within certain timeframe such as a day or few hours. Also, such systems do not allow a mechanism to board the transport from unofficial stops which are not defined in the predefined route. Hence, there is a need for a system that overcomes the limitations of the above-described systems.

US 2020/210979 A1 discloses a method and a system for public transportation fare calculations based on geolocation.

JP 2020 113014 A refers to a movement management system that may more accurately grasp movement of a user by a moving body.

The information disclosed in this background of the disclosure section is only for enhancement of understanding of the general background of the invention and should not be taken as an acknowledgement or any form of suggestion that this information forms the prior art already known to a person skilled in the art.

### SUMMARY

The invention is defined in the independent claims. The dependent claims describe optional embodiments of the invention.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
Figure 1A illustrates an illustrates an exemplary environment for managing multi-mode transport of a user, in accordance with some embodiments of the present disclosure;
Figure 1B shows a system for managing multi-mode transport of a user, in accordance with some embodiments of the present disclosure;
Figure 2 illustrates an internal architecture of a server for managing multi-mode transport of a user, in accordance with some embodiments of the present disclosure;
Figure 3 shows an exemplary flow chart illustrating method steps for managing multi-mode transport of a user, in accordance with some embodiments of the present disclosure;
Figure 4A and 4B show exemplary illustrations for managing multi-mode transport of a user, in accordance with some embodiments of the present disclosure;
Figure 5A and 5B show exemplary sequence diagrams illustrating messaging between a server, a transport facility, and a user device, in accordance with some embodiments of the present disclosure;
Figure 5C shows exemplary illustration for managing multi-mode transport of a user, in accordance with some embodiments of the present disclosure;
Figure 6 shows a block diagram of a general-purpose computing system for managing multi-mode transport of a user, in accordance with embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Embodiments of the present disclosure relate to a method for managing multi-mode transport of a user. The multi-mode transport of the user is managed using broadcast signals from transmitter devices installed at different locations such as transport facilities and vehicles. When the user arrives at a first location such as a bus station, a user device receives a broadcast signal from a transmitter installed in the bus station. Further, when the user boards a vehicle, the user device receives vehicle broadcast signals. Similarly, the user device may receive subsequent broadcast signals from subsequent stations or vehicles. Then the user device transmits the broadcast signals to a server. The server generates a sequence of modes of transport travelled by the user, based on the broadcast signals. The sequence is used for initiating payment for the multi-mode transport of the user. Hence, fares for journey of the user are calculated by the server. The user can make one-time payment after completion of the journey. Hence, convenience of the user is increased. Further, there is no requirement of pre-planning of route or sequence of transport in advance. Also, the users can board the vehicles from unofficial stops.

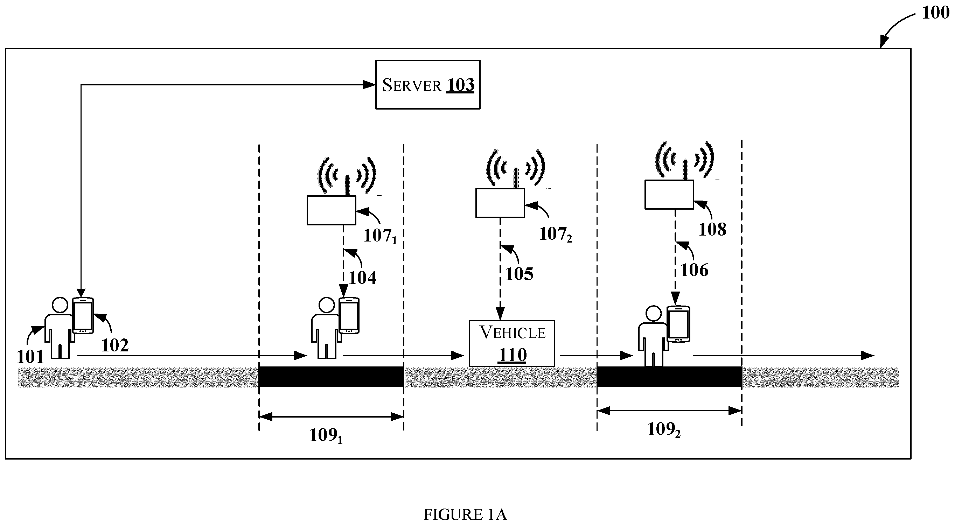

Figure 1A illustrates an exemplary environment 100 for managing multi-mode transport of a user, in accordance with some embodiments of the present disclosure. The exemplary environment 100 comprises a user 101, a user device 102, a server 103, one or more first transmitter devices 107₁, 107₂, one or more second transmitter devices 108, a first terminal broadcast signal 104, one or more vehicle broadcast signals 105, a second terminal broadcast signal 106, a vehicle 110, and one or more transport facilities 109₁, 109₂. The user 101 may be a person taking one or more modes of a transport. For example, the one or more modes of transport may be a bus transport, a train transport, and the like. The user 101 may take the one or more modes of transport in a sequence. For example, the user 101 may take a bus, a metro train, and a taxi when travelling from home to an office. In an embodiment, the user 101 may not follow the sequence and can take different modes of transport without pre-planning a sequence of the modes of transport.

In an embodiment, the user device 102 may be associated with the user 101. The user device 102 may be any electronic device carried by the user 101 while travelling the one or more modes of the transport. For example, the user 101 may be carrying a smartphone while travelling the one or more modes of the transport. The user device 102 may be any other devices such as a tablet, a notebook, a laptop, and the like. The one or more transport facilities 109₁, 109₂ may be facilities that enable the user 101 to take the one or more modes of the transport. For example, the one or more transport facilities 109₁, 109₂ may be a bus station, a metro station, and the like. The one or more vehicles 110 may be bus, a metro train, a cab, and the like. The one or more transport facilities 109₁, 109₂ may comprise a ticket counter, validators, a pass counter, and the like. The one or more transport facilities 109₁, 109₂ are also referred as the one or more transport facilities 109 hereafter in the present description. The one or more transport facilities 109₁ and 109₂ may be located in a first location and a second location, respectively. For example, the user 101 may take a metro train at a first transport facility in the first location in a city to a second transport facility in the second location in the city.

The one or more first transmitter devices 107₁, 107₂ and the one or more second transmitter devices 108 may be configured to transmit broadcast signals to nearby devices within a range. The one or more first transmitter devices 107 and the one or more second transmitter devices 108 may be a Bluetooth-enabled device, a Wireless Fidelity (Wi-Fi)-enabled device, a Zigbee-enabled device, an Ultra-Wideband (UWB)-enabled device, and the like. For example, the one or more first transmitter devices 107₁, 107₂ and the one or more second transmitter devices 108 may be beacons. The nearby device may be the user device 102. The one or more first transmitter devices 107₁, 107₂ may be configured to provide at least one of, the first terminal broadcast signal 104 and the one or more vehicle broadcast signals 105. Figure 1A shows the first transmitter device 107₁ configured to provide the first terminal broadcast signal 104 at the transport facility 109₁. Also, figure 1A shows the first transmitter device 107₂ configured to provide a vehicle broadcast signal at the transport facility 109₂. The first transmitter device 107₂ may provide the one or more vehicle broadcast signals 105 from the first location to the second location and Figure 1A showing one vehicle broadcast signal from the first transmitter device 107₂ should not be considered as limiting. The one or more first transmitter devices 107₁, 107₂ are also referred as the one or more first transmitter devices 107 hereafter in the present description. The one or more first transmitter devices 107₁, 107₂ may be installed in at least one of, the one or more transport facilities 109₁, 109₂ and the vehicle 110. The one or more first transmitter devices 107 may be installed in any locations of the one or more transport facilities 109₁, 109₂ and the vehicle 110. For example, the one or more first transmitter devices 107 may be installed at an entrance of a transport facility 109₁. In another example, the one or more first transmitter devices 107 may be installed near a door of the vehicle 110. The one or more second transmitter devices 108 may be installed in the transport facility 109₂ in the second location. For example, the one or more second transmitter devices 108 may be installed at an exit of the transport facility 109₂. A person skilled in the art will appreciate that the one or more first transmitter devices 107 and the one or more second transmitter devices 108 may be installed in any locations other than above-mentioned locations such that the user device 102 will be in range with the one or more first transmitter devices 107 and the one or more second transmitter devices 108.

The server 103 may be configured to manage the multi-mode transport of the user 101. The server 103 may be configured to receive at least one of, the first terminal broadcast signal 104 and the one or more vehicle broadcast signals 105, from the one or more first transmitter devices 107. The server 103 may receive at least one of, the first terminal broadcast signal 104 and the one or more vehicle broadcast signals 105 via the user device 102. The first terminal broadcast signal 104 may comprise a location information, a time information, and the like related to the first location. The one or more vehicle broadcast signals 105 may comprise a location information and a time information related to a vehicle of the one or more vehicles 110. Further, the server 103 may be configured to receive the second terminal broadcast signal 106 comprising a location information and a time information related to the second location, from the one or more second transmitter devices 108. The server 103 may receive the second terminal broadcast signal 106 via the user device 102. Further, the server 103 is configured to generate a sequence of the one or more modes of the transport travelled by the user 101 in a trip. The trip may comprise the one or more modes of the transport travelled by the user 101. The sequence may be generated based on at least one of, the first terminal broadcast signal 104, the one or more vehicle broadcast signals 105, and the second terminal broadcast signal 106. Specifically, the sequence may of the one or more modes of the transport travelled by the user 101 may be generated using the location information and the time information in the first terminal broadcast signal 104, the one or more vehicle broadcast signals 105, and the second terminal broadcast signal 106.

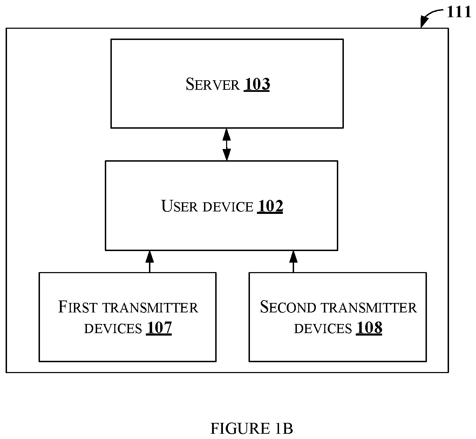

Figure 1B illustrates a system 111 for managing the multi-mode transport of the user 101. The system 111 comprises components such as the one or more first transmitter devices 107 and the one or more second transmitter devices 108. Further, the system 111 comprises the user device 102 associated with the user 101. Furthermore, the system 111 comprises the server 103. The components of the system 111 communicate with each other for managing the multi-mode transport of the user 101. The user device 102 may receive the first terminal broadcast signal 104 and the one or more vehicle broadcast signals 105, from the one or more first transmitter devices 107. The user device 102 may transmit the first terminal broadcast signal 104 and the one or more vehicle broadcast signals 105 to the server 103. The user device 102 may receive the second terminal broadcast signal 106 from the one or more second transmitter devices 108. The user device 102 may transmit the second terminal broadcast signal 106 to the server 103. The server 103 may communicate with the user device 102 for managing the multi-mode transport of the user 101 (explained later in the description). In an embodiment, the user device 102 and the server 103 may be connected over the Internet. The components of the system 111 may communicate over a communication network (not shown in Figure 1A). The communication network may include, without limitation, a direct interconnection, local area network (LAN), wide area network (WAN), wireless network (e.g., using Wireless Application Protocol), the Internet, etc.

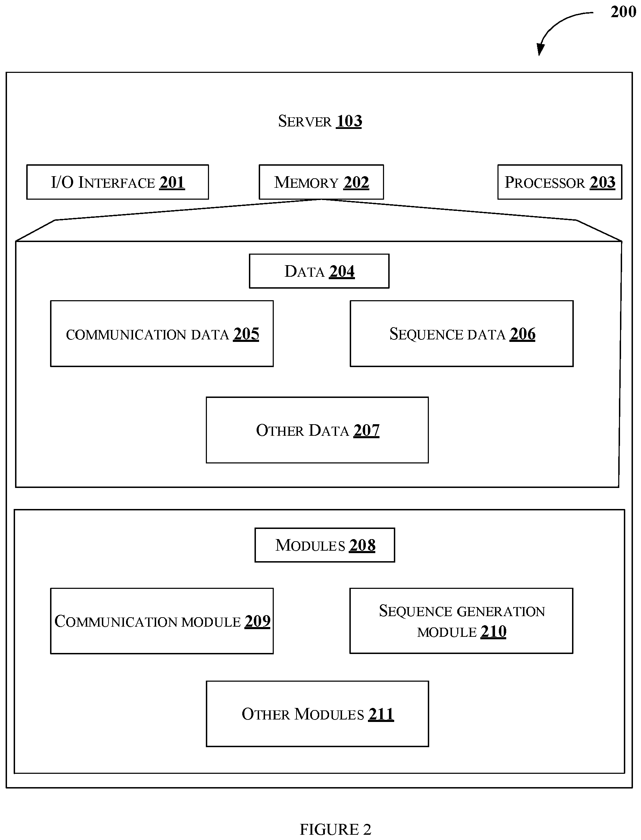

Figure 2 illustrates an internal architecture 200 of the server 103 to manage the multi-mode transport of the user 101, in accordance with some embodiments of the present disclosure. The server 103 may include the one or more processors 203, the memory 202, and the I/O interface 201.

The server 103 may include Central Processing Units 203 (also referred as "CPUs" or "one or more processors 203"), Input/ Output (I/O) interface 201, and a memory 202. In some embodiments, the memory 202 may be communicatively coupled to the processor 203. The memory 202 stores instructions executable by the one or more processors 203. The one or more processors 203 may comprise at least one data processor for executing program components for executing user or system-generated requests. The memory 202 may be communicatively coupled to the one or more processors 203. The memory 202 stores instructions, executable by the one or more processors 203, which, on execution, may cause the one or more processors 203 to manage the multi-mode transport of the user 101. In an embodiment, the memory 202 may include one or more modules 208 and data 204. The one or more modules 208 may be configured to perform the steps of the present disclosure using the data 204, to manage the multi-mode transport of the user 101. In an embodiment, each of the one or more modules 208 may be a hardware unit which may be outside the memory 202 and coupled with the server 103. As used herein, the term modules 208 refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more modules 208 when configured with the described functionality defined in the present disclosure will result in a novel hardware. Further, the I/O interface 201 is coupled with the one or more processors 203 through which an input signal or/and an output signal is communicated. For example, the I/O interface 201 may comprise I/O buses.

In one implementation, the modules 208 may include, for example, a communication module 209, a sequence generation module 210, and other modules 211. It will be appreciated that such aforementioned modules 208 may be represented as a single module or a combination of different modules. In one implementation, the data 204 may include, for example, communication data 205, sequence data 206, and other data 207.

In an embodiment, the communication module 209 may be configured to receive the first terminal broadcast signal 104 from the one or more first transmitter devices 107 installed in the transport facility 109. The communication module 209 may receive the first terminal broadcast signal 104 via the user device 102. The first terminal broadcast signal 104 may comprise the location information, the time information, and the like related to the first location. The first terminal broadcast signal 104 may comprise one or more fields. A first field may comprise the location information. Further, a second field may comprise the time information. Further, a third field may comprise a signal identification indicating the first terminal broadcast signal 104 is transmitted in the first location. For example, the signal identification may be a value "0". In an example, the user 101 may arrive at a first location A at time 12:00. The first terminal broadcast signal 104 may comprise the first location A in the first field, time 12:00 in the second field, and the value "0" in the third field. Further, the communication module 209 may be configured to receive the one or more vehicle broadcast signals 105 from the one or more first transmitter devices 107 installed in the one or more vehicles 110. The communication module 209 may receive the one or more vehicle broadcast signals 105 via the user device 102. The one or more vehicle broadcast signals 105 may comprise the location information, the time information, and the like related to a vehicle from the one or more vehicles 110. Each of the one or more vehicle broadcast signals 105 may comprise one or more fields as explained above. A third field in each of the one or more vehicle broadcast signals 105 may comprise a signal identification indicating corresponding vehicle broadcast signal is transmitted in the vehicle. For example, the signal identification may be a value "1". In the above example, the user 101 may arrive at a location X in between the first location A and a second location B at time 13:00. A vehicle broadcast signal may comprise the location X in the first field, time 13:00 in the second field, and the value "1".

Further, the communication module 209 may be configured to receive the second terminal broadcast signal 106 from the one or more second transmitter devices 108 installed in the second transport facility 109₂. The second terminal broadcast signal 106 may comprise the location information, the time information, and the like related to the second location. The second terminal broadcast signal 106 may comprise the one or more fields as explained above. A third field in the second terminal broadcast signal 106 may comprise a signal identification indicating the second terminal broadcast signal 106 is transmitted in the second location. For example, the signal identification may be a value "2". In the above example, the user 101 may arrive at the second location B at time 13:30. The second terminal broadcast signal 106 may comprise the second location B in the first field, time 13:30 in the second field, and the value "0". A person skilled in the art will appreciate that the signal identification may comprise any representation of values such as binary values/ hexa-decimal values/ alphanumeric values.

The communication module 209 may receive only the first terminal broadcast signal 104 when the user 101 is at the transport facility 109 in the first location. For example, the first terminal broadcast signal 104 may comprise the first location A, the time 12:00, and the value "0". Further, the communication module 209 may receive the first terminal broadcast signal 104 and a vehicle broadcast signal when the user 101 is boarding the vehicle. For example, a vehicle broadcast signal may comprise the first location, time 12:05, and the value "1". The communication module 209 may receive the vehicle broadcast signal and the second terminal broadcast signal 106 when the user 101 is deboarding the vehicle of the one or more vehicles 110. For example, a vehicle broadcast signal may comprise the first location, the time 13:25, and the value "1". Further, the communication module 209 may receive only the second terminal broadcast signal 106 when the user 101 is at the transport facility 109 in the second location. For example, second terminal broadcast signal 106 may comprise the second location B, the time 13:30, and the value "2".

The communication module 209 may utilize Wireless Fidelity (Wi-Fi) module, Bluetooth, Global System for Mobile communication (GSM), Zigbee and the like to communicate with the user device 102. In an example, the communication module 209 may not be connected to the user device 102 for a certain time period. For example, the transport facility 109 may be an underground metro station. The user device 102 may not have Internet connectivity with the communication module 209. The communication module 209 may receive the first terminal broadcast signal 104, the one or more vehicle broadcast signals 105, the second terminal broadcast signal 106 when the Internet connection is re-established. In another example, the communication module 209 may receive the first terminal broadcast signal 104, the one or more vehicle broadcast signals 105, the second terminal broadcast signal 106 after completion of the trip of the user 101. In another example, the communication module 209 may be always connected to the user device 102. The user device 102 may transmit the first terminal broadcast signal 104, the one or more vehicle broadcast signals 105, the second terminal broadcast signal 106 immediately. The location information and the time information in the first terminal broadcast signal 104, the one or more vehicle broadcast signals 105, the second terminal broadcast signal 106 may be stored as the communication data 205 in the memory 202.

In an embodiment, the sequence generation module 210 may be configured to receive the communication data 205 from the communication module 209. The sequence generation module 210 is configured to generate a sequence of the one or more modes of the transport travelled by the user 101 in the trip. The sequence generation module 210 may be configured to correlate the location information and the time information in the first terminal broadcast signal 104, the one or more vehicle broadcast signals 105, and the second terminal broadcast signal 106. The sequence comprising one or more stops may be generated based on the correlation. Referring to the above example, a first stop in the sequence may be generated indicating the user 101 arriving the location A at 12:00. A second stop in the sequence may be generated indicating the user 101 boarding the vehicle at 12:05. A third stop in the sequence may be generated indicating the user 101 deboarding the vehicle at 13:25. A fourth stop in the sequence may be generated indicating the user 101 arriving the location B at 13:30. The sequence may be generated by placing the one or more stops in the order. The sequence generated may be stored as the sequence data 206 in the memory 202.

In an embodiment, the sequence generation module 210 may generate the sequence based on the one or more vehicle broadcast signals 105 and the first terminal broadcast signal 104/the second terminal broadcast signal 106 when the first location/the second location is not saved in the server 103. For example, the user 101 may board a bus at an unofficial stop. Further, the user 101 may deboard the bus at a bus station. In this example, the first location is not saved in the server 103. The sequence generation module 210 may generate the sequence based on the one or more vehicle broadcast signals 105 transmitted by a first transmitter device in the vehicle 110 and the second terminal broadcast 106 signal transmitted by a second transmitter device in the bus station. In an embodiment, the sequence generation module 210 may generate the sequence based on the one or more vehicle broadcast signals 105 when the first location and the second location are not saved in the server 103. For example, the user 101 may board and deboard a bus at unofficial stops. In this example, the first location and the second location are not saved in the server 103. The sequence generation module 210 may generate the sequence based on the one or more vehicle broadcast signals 105 transmitted by the first transmitter device in the vehicle 110. Further, the sequence generation module 210 may initiate the payment for the multi-mode transport based on the sequence. The payment may be initiated based on the first location, the second location, a distance travelled by the user 101 when the first location and the second location is not saved, and the like. The distance travelled by the user 101 may be determined based on a boarding time and a deboarding time, and route information of a vehicle of the one or more vehicles 110. The payment may be initiated upon indication of the trip by the user 101, a predefined time interval after the user 101 has completed the trip, and the like. For example, the user 101 may provide the indication to the sequence generation module 210 via the user device 102. In another example, the user device 102 may indicate the sequence generation module 210 that the first terminal broadcast signal 104, the one or more vehicle broadcast signals 105, or the second terminal broadcast signal 106 are not received for an hour. The sequence generation module 210 may initiate the payment for the multi-mode transport based on the sequence.

The other data 207 may store data, including temporary data and temporary files, generated by the one or more modules 208 for performing the various functions of the server 103. The other data 207 may be stored in the memory 202. The one or more modules 208 may also include the other modules 211 to perform various miscellaneous functionalities of the server 103. It will be appreciated that the one or more modules 208 may be represented as a single module or a combination of different modules.

In an embodiment, the transport facility 109 at the first location and the second location may be associated with validators. In such embodiments, the other modules 211 may comprise a unique identification generation module and an output module. The unique identification generation module may be configured to receive a request from the user 101 to a mobile application. The mobile application may be provisioned in the user device 102 for managing the multi-mode transport of the user 101. The mobile application may prompt the user 101 to provide details associated with the user 101. The details associated with the user 101 may be name of the user 101, mobile number of the user 101, payment details of the user 101, and the like. The unique identification generation module may be configured to verify a payment method of the user 101 based on the details associated with the user 101. Further, the unique identification generation module may be configured to generate a unique identification for the user 101, to identify the user 101 as a registered user.

The output module may be configured to transmit the unique identification of the user 101 to the user device 102 and the transport facility 109. Further, the output module may be configured to transmit a public key to the user device 102 and a private key to each validator associated the transport facility 109 at the first location and the second location. The output module may transmit the public key and the private key at pre-defined intervals. For example, the output module may transmit the public key and the private key at morning 6:00. Further, the output module may transmit the public key and the private key every two hours. The user device 102 generates a machine-readable code from the public key and the unique identification of a user 101. For example, the machine-readable code may be a Quick Response (QR) code. The machine-readable code is validated at the validators. The validation comprises decrypting the machine-readable code using the private key transmitted to each validator. Further, the validation comprises matching the unique identification associated with the machine-readable code with the unique identification transmitted to the validator. The user 101 is identified as a registered user when there is a match between the unique identification associated with the machine-readable code and the unique identification transmitted to the validator. Hence, the user 101 may take the one or more modes of the transport at the transport facilities associated with the validators, by using the machine-readable code. The other data 207 may comprise the unique identification, the public key, and the private key.

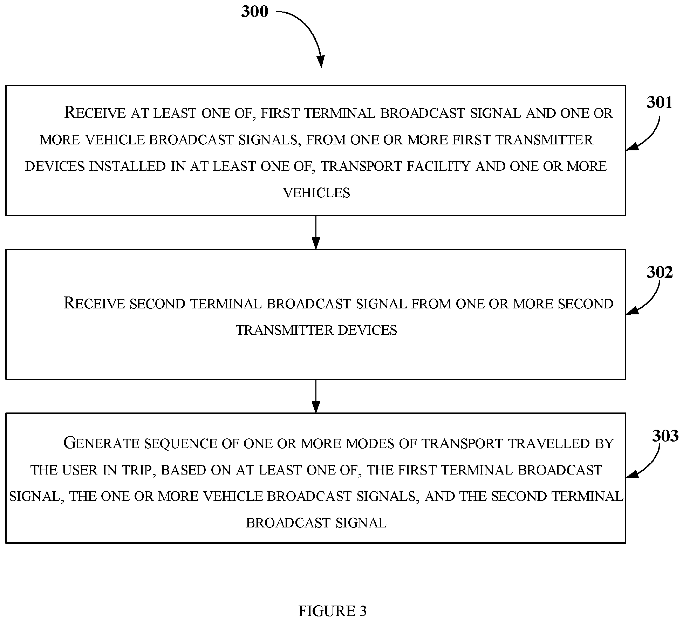

Figure 3 shows an exemplary flow chart illustrating method steps to manage the multi-mode transport of the user 101, in accordance with some embodiments of the present disclosure. As illustrated in Figure 3, the method 300 may comprise one or more steps. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

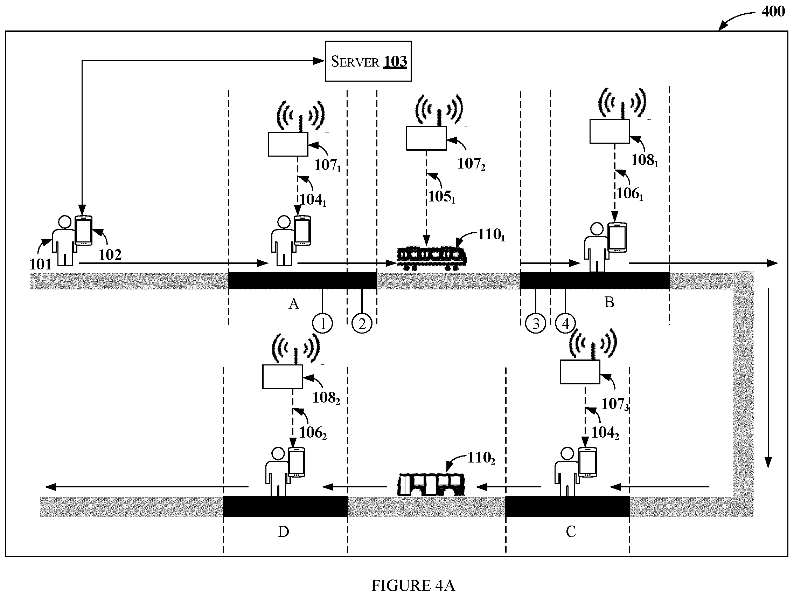

At step 301, the server 103 may receive the first terminal broadcast signal 104 from the one or more first transmitter devices 107 installed in the transport facility 109. Further, the server 103 may be configured to receive the one or more vehicle broadcast signals 105 from the one or more first transmitter devices 107 installed in the one or more vehicles 110. The server 103 may receive the first terminal broadcast signal 104 and the one or more vehicle broadcast signals 105. Referring to example 400 of Figure 4A, consider the user 101 takes a first mode of the transport. The user 101 arrives a transport facility A in a first location A. The transport facility A may be a metro station A. A first transmitter device 107₁ may be installed in the metro station A. The user device 102 may receive the first terminal broadcast signal 104₁ from the transmitter device 107₁ at time 10:00 at reference 1. Reference 1 indicates the user 101 is in the first location A. The user 101 may board the vehicle 110₁ at reference 2. The vehicle 110₁ may be a metro train. The reference 2 indicates the user 101 boarding the metro train in the first location A. The user device 102 may receive both the first terminal broadcast signal 104₁ from the transmitter device 107₁ and a vehicle broadcast signal 105₁ from the transmitter device 107₂ in the metro train at time 10:10 at the reference 2. Further, the user device 102 may receive only the vehicle broadcast signal 105₁ when the user 101 is travelling in the metro train. Consider the user 101 may take a second mode of the transport. The user 101 may arrive at a transport facility C in a third location C. The transport facility C may be a bus station. The user device 102 may receive the first terminal broadcast signal 104₂ from the transmitter device 107₃ installed in the bus station at time 11:20. Further, the user device 102 may board the vehicle 110₂. The vehicle 110₂ may be a bus.

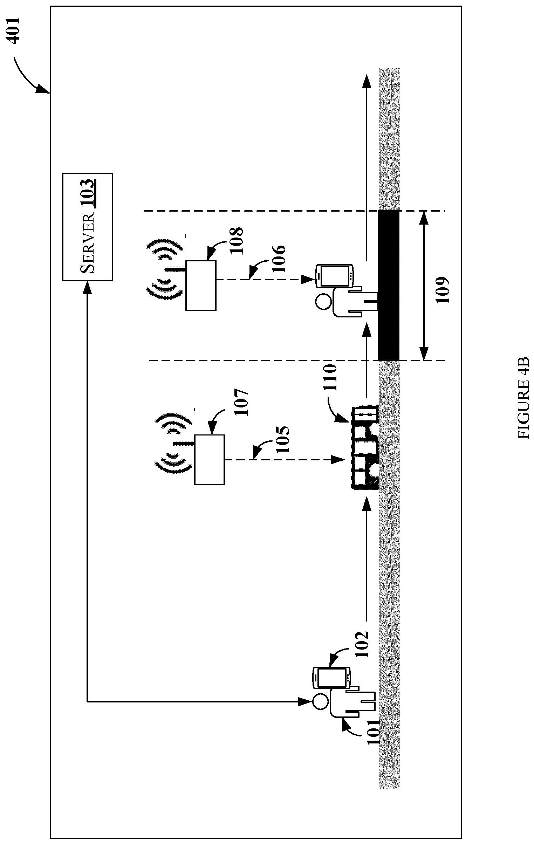

Referring back to Figure 3, at step 302, the server 103 may receive the second terminal broadcast signal 106 from the one or more second transmitter devices 108. The server 103 may receive the second terminal broadcast signal 106 via the user device 102. Referring again to the first mode of transport in the example 400 of Figure 4B, the user 101 may deboard the metro train at reference 3. The reference 3 indicates the user 101 deboarding the metro train in a transport facility B in a second location B. The transport facility B may be a metro station B. The user device 102 may receive both the vehicle broadcast signal 105₁ and the second terminal broadcast signal 106₁ from the second transmitter device 108₁ in the second location B at time 11:00 at the reference 3. Further, the user device 102 may receive only the second terminal broadcast signal 106₁ when the user 101 is in the second location B at time 11:05 at reference 4. Referring to the second mode of the transport, the user 101 may deboard the bus at a transport facility D in a fourth location D. The user device 102 may receive the second terminal broadcast signal 106₂ from the second transmitter device 108₂ in the fourth location D at time 12:00.

Referring back to Figure 3, at step 303, the server 103 generates the sequence of the one or more modes of the transport travelled by the user 101 in the trip. The server 103 may be configured to correlate the location information and the time information in the first terminal broadcast signal 104, the one or more vehicle broadcast signals 105, and the second terminal broadcast signal 106. The sequence comprising one or more stops may be generated based on the correlation. Referring again to the example 400 of Figure 4A, the sequence comprising the one or more stops may be generated. The server 103 may generate a first stop indicating the user 101 arriving the first location A at 10:00. The server 103 may generate a second stop indicating the user 101 boarding the metro train at 10:10. The server 103 may generate a third stop indicating the user 101 deboarding the vehicle at 11:00. The server 103 may generate a fourth stop indicating the user 101 arriving the second location B at 11:05. The server 103 may generate a fifth stop indicating the user 101 arriving the third location C at 11:20. The server 103 may generate a sixth stop indicating the user 101 arriving the fourth location D at 12:00. The sequence may be generated by placing the one or more stops in the order.

In an embodiment, the server 103 may generate the sequence based on the one or more vehicle broadcast signals 105 and one of, the first terminal broadcast signal 104 and the second terminal broadcast signal 106 when one of, the second location and the first location is not saved in the server 103. The phrase "not saved in the server 103" in the claims and the description indicates that the first location or the second location is not saved in the server 103 as official transport facilities/stations. Referring to example 401 at Figure 4B, the user 101 may board a bus at an unofficial station which is not a registered station. The server 103 may receive the one or more vehicle broadcast signals 105 from the first transmitter device 107 installed in the bus when the user boards the bus. Further, the user 101 may deboard the bus at a bus station in a second location. The server 103 may receive the one or more vehicle broadcast signals 105 from the first transmitter device 107 and the second terminal broadcast signal 106 from the second transmitter device 108 installed in the transport facility 109. In this example, the first location is not saved in the server 103. The server 103 may generate the sequence based on the one or more vehicle broadcast signals 105 and the second terminal broadcast signal 106. In an embodiment, the server 103 may generate the sequence based on the one or more vehicle broadcast signals 105 when the first location and the second location are not saved in the server 103. The server 103 may initiate the payment for the multi-mode transport based on the sequence. The payment may be initiated upon indication of the trip by the user 101, a predefined time interval after the user 101 has completed the trip, and the like.

In an embodiment, when the user 101 boards the vehicle 110 from an unofficial stop, the sequence of the locations travelled by the user 110 may be tracked in one or more ways. In a first instance, the one or more vehicle broadcast signals 105 may comprise location information of the vehicle 110. The location information may be updated in the one or more vehicle broadcast signals 105 using a Global Positioning System (GPS) installed in the vehicle 110. Hence, each time the user device 102 receives the one or more vehicle broadcast signals 105, the location of the vehicle 110 is also captured. When the user device 102 transmits the one or more vehicle broadcast signals 105 to the server 103, the sequence of the locations travelled by the user 110 may be determined using the location information present in the one or more vehicle broadcast signals 105. In an embodiment, the location of the user 101 may be determined using GPS installed in the user device 102. The user device 102 may transmit the broadcast signals (vehicle and terminals) and GPS data to the server 103. The server 103 may use the broadcast signals and the GPS data to track and verify the sequence of locations travelled by the suer 101. In a second instance, when the vehicle crosses different terminals, signals broadcasted by the different terminals may be received by the user device 102 along with the one or more vehicle broadcast signals 105. The signals broadcasted by the different terminals may include respective location information. The signals broadcasted by the different terminals along with the one or more vehicle broadcast signals 105 may be used by the server 103 to determine the sequence of locations travelled by the user 101. In the second instance, the signals broadcasted by the different terminals may be used to verify the sequence of locations travelled by the user 101. For example, when the user 101 boards the vehicle 110 at an unofficial stop, only the vehicle broadcast signal 105 is received by the user device 102. Further, as the vehicle 110 crosses different terminals, the signals broadcasted by the different terminals along with the vehicle broadcast signals 105 are received by the user device 102. Thereafter, when the user de-boards the vehicle 110 at an unofficial stop, the last signal received by the user device 102 is the vehicle broadcast signal 105. Using this information, the server 103 determines the sequence of locations travelled by the user 101, the location where the user 101 boarded the vehicle 110 and the location where the user 101 de-boarded the vehicle 110. The determined information may be used to calculate a fare for the distance travelled by the user 101.

In an embodiment, the transport facility 109 at the first location and the second location may be associated with validators. Reference is made to exemplary sequence diagram 500 illustrating generation of the unique identification for the user 101. 501 illustrates the mobile application in the user device 102. The user device 102 may prompt the user 101 to provide the details associated with the user 101. The user 101 may provide the details via a user interface of the user device 102. An option "Register" may be provided to the user 101. When the user 101 selects the option "Register", the request for registering to the server 103 may be transmitted to the server 103. The server 103 may verify the payment method of the user 101 for the multi-mode transport. The verification of the payment methods may be performed using any known techniques such as transmitting a One-Time Password (OTP) to a registered mobile number of a bank account of the user 101. The server 103 may generate the unique identification for the user 101. The unique identification may be numeric/alphanumeric. For example, the unique identification may be a 12-digit number. The server 103 may transmit the unique identification to the transport facility 109 in the first location and the second location, and the user device 102. The transport facility 109 may transmit the unique identification to associated validators.

Reference is made to exemplary sequence diagram 500 illustrating validation of the machine-readable code at the validators. The validation may be performed using a Public Key Infrastructure (PKI). The server 103 may transmit the public key to the user device 102 and the private key to the transport facility 109 at the first location and the second location. The transport facility 109 at the first location and the second location may transmit the private key to associated validators. The server 103 may transmit the public key and the private key at pre-defined intervals. The user device 102 may generate the machine-readable code from the public key and the unique identification of a user 101. The machine-readable code may be validated at the validators. The validation comprises decrypting the machine-readable code using the private key transmitted to each validator. Further, the validation comprises matching the unique identification associated with the machine-readable code with the unique identification transmitted to the validator. The user 101 is identified as a register when there is a match between the unique identification associated with the machine-readable code and the unique identification transmitted to the validator.

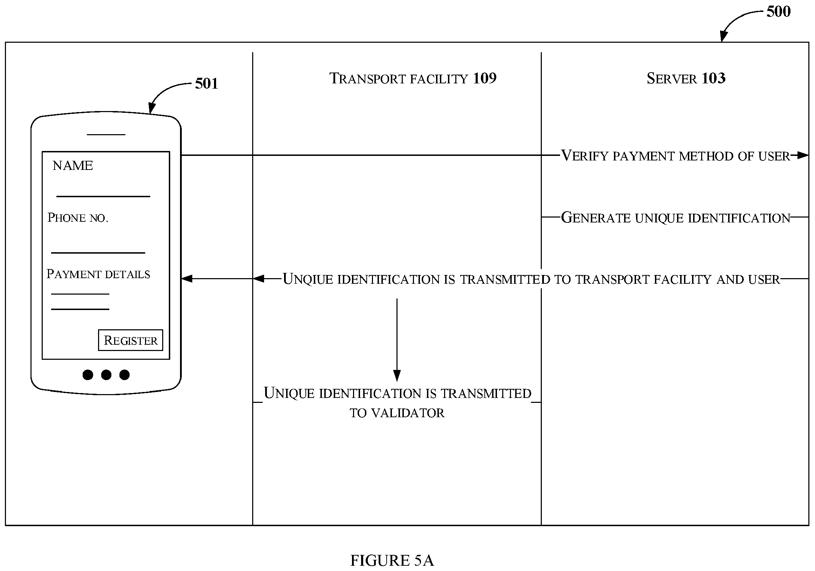

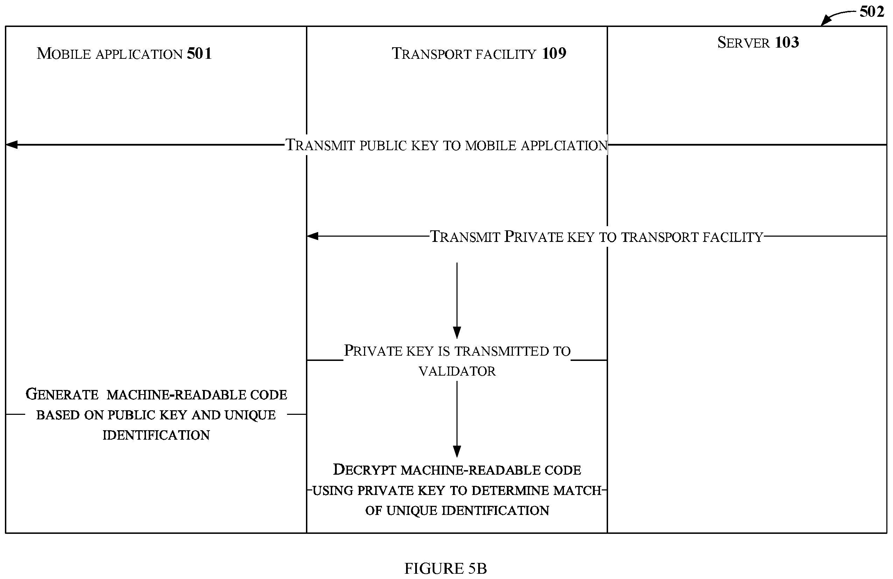

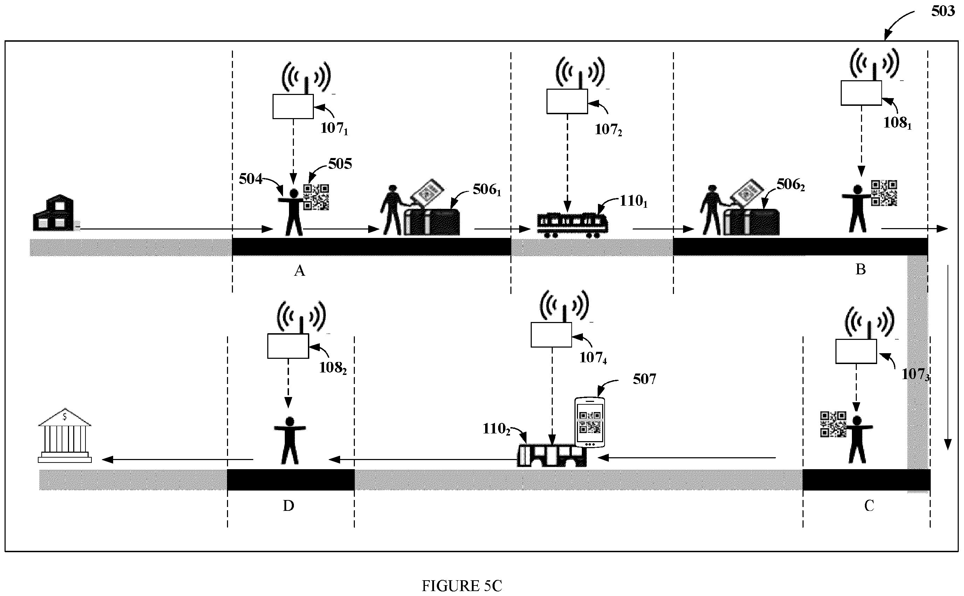

Referring to example 503 of Figure 5C, consider a user 504 is travelling from home to a bank. The user device 102 generates a machine-readable code 505 using the public key and the unique identification of the user 504 transmitted by the server 103. 506₁ shows a validator at a transport facility A at a first location A. The user 504 places the device in proximity to the validator 506₁. The validator 506₁ performs the validation based on information in the machine-readable code 505 and allows the user 101 to take the mode of the transport. For example, an entry gate may be opened upon the validation. The user 504 travels from the first location A to a second location B in the vehicle 110₁. The user 504 uses the machine-readable code 505 at a validator 506₂. The validator 506₂ performs the validation based on information in the machine-readable code 505 and allows the user 101 to exit the mode of the transport. Thereafter, the user 101 may board a bus from a third location C to a fourth location D. Transport facilities C and D at the third location C and the fourth location D, respectively, may not have validators. The transport of the user 101 may be managed based on the first terminal broadcast signal 104, the one or more vehicle broadcast signals 105, and the second terminal broadcast signal 106. In another example, a vehicle operator (e.g., ticket collector/ driver) may be associated with a handheld device 507. The handheld device may be associated with a machine-readable code reader (for example, a QR reader). The user 101 may display the multi-dimensional code 505 (for example, QR code) to the vehicle operator and the vehicle operator may scan the multi-dimensional code 505 to authenticate the user 101 as a registered user. The sequence may be generated based on the first terminal broadcast signal 104, the one or more vehicle broadcast signals 105, and the second terminal broadcast signal 106. These embodiments ensure that the present disclosure can be implemented in existing transport facilities comprising the validators.

### COMPUTER SYSTEM

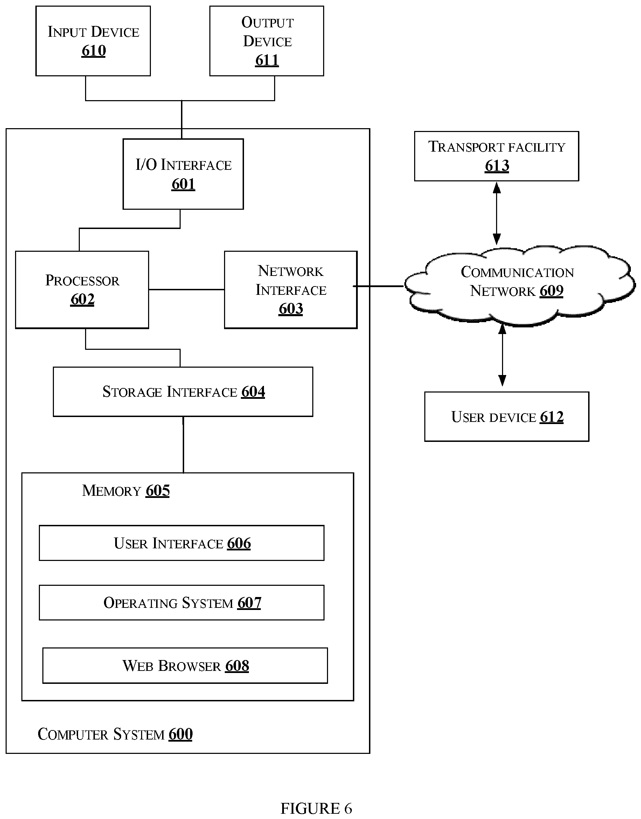

Figure 6 illustrates a block diagram of an exemplary computer system 600 for implementing embodiments consistent with the present disclosure. In an embodiment, the computer system 600 may be used to implement the server 103. Thus, the computer system 600 may be used to manage the multi-mode transport of the user 101. In an embodiment, the computer system 600 may receive the first terminal broadcast signal 104, the one or more vehicle broadcast signals 105, and the second terminal broadcast signal 106 from the user device 612 over the communication network 609. The computer system 600 may transmit the unique identification to the user device 612 and the transport facility 613 over the communication network 609. The computer system 600 may transmit the public key and the private key to the user device 612 and the transport facility 613, respectively, over the communication network 609. The computer system 600 may comprise a Central Processing Unit 602 (also referred as "CPU" or "processor"). The processor 602 may comprise at least one data processor. The processor 602 may include specialized processing units such as integrated system (bus) controllers, memory management control units, floating point units, graphics processing units, digital signal processing units, etc.

The processor 602 may be disposed in communication with one or more input/output (I/O) devices (not shown) via I/O interface 601. The I/O interface 601 may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 601, the computer system 600 may communicate with one or more I/O devices. For example, the input device 610 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 611 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The computer system 600 is connected to the user device 612 and the transport facility 613 through the communication network 609. The processor 602 may be disposed in communication with the communication network 609 via a network interface 603. The network interface 603 may communicate with the communication network 609. The network interface 603 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 609 may include, without limitation, a direct interconnection, local area network (LAN), wide area network (WAN), wireless network (e.g., using Wireless Application Protocol), the Internet, etc. The network interface 603 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 609 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 602 may be disposed in communication with a memory 605 (e.g., RAM, ROM, etc. not shown in Figure 6) via a storage interface 604. The storage interface 604 may connect to memory 605 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 605 may store a collection of program or database components, including, without limitation, user interface 606, an operating system 607, web browser 608 etc. In some embodiments, computer system 600 may store user/application data, such as, the data, variables, records, etc., as described in this disclosure. Such databases may be implemented as fault-tolerant, relational, scalable, secure databases such as Oracle ^{®} or Sybase^{®}.

The operating system 607 may facilitate resource management and operation of the computer system 600. Examples of operating systems include, without limitation, APPLE MACINTOSH^{R} OS X, UNIX^{R}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{R} IOS^{™}, GOOGLE^{R} ANDROID^{™}, BLACKBERRY^{R} OS, or the like.

In some embodiments, the computer system 600 may implement the web browser 608 stored program component. The web browser 608 may be a hypertext viewing application, for example MICROSOFT^{R} INTERNET EXPLORER^{™}, GOOGLE^{R} CHROME^{™0}, MOZILLA^{R} FIREFOX^{™}, APPLE^{R} SAFARI^{™}, etc. Secure web browsing may be provided using Secure Hypertext Transport Protocol (HTTPS), Secure Sockets Layer (SSL), Transport Layer Security (TLS), etc. Web browsers 608 may utilize facilities such as AJAX^{™}, DHTML^{™}, ADOBE^{R} FLASH^{™}, JAVASCRIPT^{™}, JAVA^{™}, Application Programming Interfaces (APIs), etc. In some embodiments, the computer system 600 may implement a mail server (not shown in Figure) stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{R}, .NET^{™}, CGI SCRIPTS^{™}, JAVA^{™}, JAVASCRIPT^{™}, PERL^{™}, PHP^{™}, PYTHON^{™}, WEBOBJECTS^{™}, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), or the like. In some embodiments, the computer system 600 may implement a mail client stored program component. The mail client (not shown in Figure) may be a mail viewing application, such as APPLE^{R} MAIL^{™}, MICROSOFT^{R} ENTOURAGE^{™}, MICROSOFT^{R} OUTLOOK^{™}, MOZILLA^{R} THUNDERBIRD^{™}, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

Embodiments of the present disclosure provisions the user 101 to make one-time payment after completion of the j ourney, without using tickets/passes/cards at each mode of the transport. Hence, convenience of the user is increased. Further, there is no requirement of pre-planning of route or sequence of transport in advance. Also, the users can board the vehicles from unofficial stops.

Embodiments of the present disclosure can be implemented in existing transport facilities. Embodiments of the present disclosure provides methods to manage the multi-mode transport without need of continuous network connectivity.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 3 show certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

### Referral Numerals:

| **Referral number** | **Description** |
|---|---|
| 100 | Exemplary environment |
| 101 | User |
| 102 | User device |
| 103 | Server |
| 104 | First terminal broadcast signal |
| 105 | One or more vehicle broadcast signals |
| 106 | Second terminal broadcast signal |
| 107 | One or more first transmitter devices |
| 108 | One or more second transmitter devices |
| 109 | Transport facility |
| 110 | One or more vehicles |
| 111 | System |
| 200 | Internal architecture |
| 201 | I/O interface |
| 202 | Memory |
| 203 | Processor |
| 204 | Data |
| 205 | Communication data |
| 206 | Sequence data |
| 207 | Other data |
| 208 | Modules |
| 209 | Communication module |
| 210 | Sequence generation module |
| 211 | Other modules |
| 401 | Example |
| 402 | Example |
| 500 | Exemplary sequence diagram |
| 501 | Mobile application |
| 502 | Exemplary sequence diagram |
| 503 | Example |
| 504 | User |
| 505 | Machine-readable code |
| 506₁, 506₂ | Validators |
| 600 | Computer system |
| 601 | I/O interface |
| 602 | Processor |
| 603 | Network interface |
| 604 | Storage interface |
| 605 | Memory |
| 606 | User interface |
| 607 | Operating system |
| 608 | Web browser |
| 609 | Communication network |
| 610 | Input device |
| 611 | Output device |
| 612 | User device |
| 613 | Transport facility |
| 503 | Example |
| 504 | User |
| 505 | Machine-readable code |
| 506₁, 506₂ | Validators |
| 600 | Computer system |
| 601 | I/O interface |
| 602 | Processor |
| 603 | Network interface |
| 604 | Storage interface |
| 605 | Memory |
| 606 | User interface |
| 607 | Operating system |
| 608 | Web browser |
| 609 | Communication network |
| 610 | Input device |
| 611 | Output device |
| 612 | User device |
| 613 | Transport facility |

## Claims

1. A method for managing multi-mode transport of a user (101), the method comprising:
receiving, by a server (103) via a user device (102), at least one of, a first terminal broadcast signal (104) and one or more vehicle broadcast signals (105), from one or more first transmitter devices (107) installed in at least one of, a transport facility (109) and one or more vehicles (110), wherein the first terminal broadcast signal (104) and the one or more vehicle broadcast signals (105) comprises at least one of, a location information and a time information related to a first location and a vehicle of the one or more vehicles (110), respectively;
receiving, by the server (103) via the user device (102), a second terminal broadcast signal (106) comprising a location information and a time information related to a second location, from one or more second transmitter devices (108); and
generating, by the server (103), a sequence of one or more modes of transport travelled by the user (101) in a trip, based on at least one of, the first terminal broadcast signal (104), the one or more vehicle broadcast signals (105), and the second terminal broadcast signal (106), for managing a multi-mode transport of the user (101),
wherein generating the sequence comprises the following options:
(1) if the location information and the time information in the first terminal broadcast signal (104), the one or more vehicle broadcast signals (105), and the second terminal broadcast signal (106) are all saved to the server (103),
correlating the location information and the time information in the first terminal broadcast signal (104), the one or more vehicle broadcast signals (105), and the second terminal broadcast signal (106); and
generating the sequence based on the correlation,
(2) if one of, the second location and the first location is not saved in the server (103)
generating the sequence based on the one or more vehicle broadcast signals (105) and one of, the first terminal broadcast signal (104) and the second terminal broadcast signal (106), and
(3) if the first location and the second location are not saved in the server (103)
generating the sequence based on the one or more vehicle broadcast signals (105).

2. The method as claimed in claim 1, wherein a payment for the multi-mode transport is initiated based on the sequence, upon at least one of, indication of the trip by the user (101) and a predefined time interval after the user (101) has completed the trip.

3. The method as claimed in claim 1, further comprises registering the user (101) to the server (103) using a mobile application (501) associated with the user device (102) by:
receiving a request from the user (101) for registering to the server (103);
verifying a payment method of the user (101);
generating a unique identification for the user (101), to identify the user (101) as a registered user.

4. The method as claimed in claim 1, wherein the unique identification of the user (101) is transmitted to the user device (102) and a transport facility (109).

5. A server (103) for managing multi-mode transport of a user (101), the server (103) comprising:
one or more processors;
a memory storing processor-executable instructions, which, on execution, cause the one or more processors to:
receive, via a user device (102), at least one of, a first terminal broadcast signal (104) and one or more vehicle broadcast signals (105), from one or more first transmitter devices (107) installed in at least one of, a transport facility (109) and one or more vehicles (110), wherein the first terminal broadcast signal (104) and the one or more vehicle broadcast signals (105) comprises at least one of, a location information and a time information related to a first location and a vehicle of the one or more vehicles (110), respectively;
receive, via the user device (102), a second terminal broadcast signal (106) comprising a location information and a time information related to a second location, from one or more second transmitter devices (108); and
generate a sequence of one or more modes of transport travelled by the user (101) in a trip, based on at least one of, the first terminal broadcast signal (104), the one or more vehicle broadcast signals (105), and the second terminal broadcast signal (106), for managing a multi-mode transport of the user (101),
wherein the one or more processors generates the sequence using one of the following options:
(1) if the location information and the time information in the first terminal broadcast signal (104), the one or more vehicle broadcast signals (105), and the second terminal broadcast signal (106) are all saved to the server (103),
correlating the location information and the time information in the first terminal broadcast signal (104), the one or more vehicle broadcast signals (105), and the second terminal broadcast signal (106); and
generating the sequence based on the correlation,
(2) if one of, the second location and the first location is not saved in the server (103)
generating the sequence based on the one or more vehicle broadcast signals (105) and one of, the first terminal broadcast signal (104) and the second terminal broadcast signal (106), and
(3) if the first location and the second location are not saved in the server (103)
generating the sequence based on the one or more vehicle broadcast signals (105).

6. The server (103) as claimed in claim 5, wherein the one or more processors initiates a payment for the multi-mode transport based on the sequence, upon at least one of, indication of the trip by the user (101) and a predefined time interval after the user (101) has completed the trip.

7. The server (103) as claimed in claim 5, wherein the one or more processors transmits the unique identification of the user (101) to the user device (102) and the transport facility (109).

8. A system (111) for managing multi-mode transport of a user (101), the system comprising:
one or more first transmitter devices (107) and one or more second transmitter devices (108) installed in at least one of, a transport facility (109) and one or more vehicles (110);
a user device (102) associated with a user (101); and
a server (103) configured to:
receive, via the user device (102), at least one of, a first terminal broadcast signal (104) and one or more vehicle broadcast signals (105), from the one or more first transmitter devices (107), wherein the first terminal broadcast signal (104) and the one or more vehicle broadcast signals (105) comprises at least one of, a location information and a time information related to a first location and a vehicle of the one or more vehicles (110), respectively;
receive, via the user device (102), a second terminal broadcast signal (106) comprising a location information and a time information related to a second location, from the one or more second transmitter devices (108); and
generate a sequence of one or more modes of transport travelled by the user (101) in a trip, based on at least one of, the first terminal broadcast signal (104), the one or more vehicle broadcast signals (105), and the second terminal broadcast signal (106), for managing a multi-mode transport of the user (101)
wherein the one or more processors generates the sequence using one of the following options:
(1) if the location information and the time information in the first terminal broadcast signal (104), the one or more vehicle broadcast signals (105), and the second terminal broadcast signal (106) are all saved to the server (103),
correlating the location information and the time information in the first terminal broadcast signal (104), the one or more vehicle broadcast signals (105), and the second terminal broadcast signal (106); and
generating the sequence based on the correlation,
(2) if one of, the second location and the first location is not saved in the server (103)
generating the sequence based on the one or more vehicle broadcast signals (105) and one of, the first terminal broadcast signal (104) and the second terminal broadcast signal (106), and
(3) if the first location and the second location are not saved in the server (103)
generating the sequence based on the one or more vehicle broadcast signals (105).

9. The system (111) as claimed in claim 8, wherein the one or more first transmitter devices (107) and the one or more second transmitter devices (108) are one of, a Bluetooth-enabled device, a Wireless Fidelity, Wi-FI, enabled device, a Zigbee-enabled device, and an Ultra-Wideband, UWB, enabled device.

## Patentansprüche

1. Verfahren zum Verwalten eines Multimodus-Transport eines Benutzers (101), wobei das Verfahren Folgendes umfasst:
Empfangen zumindest eines aus einem ersten Endgerät-Broadcast-Sendesignal (104) und einem oder mehreren Fahrzeug-Broadcast-Sendesignalen (105) von einer oder mehreren ersten Sendevorrichtungen (107), die in zumindest einem aus einer Transporteinrichtung (109) und einem oder mehreren Fahrzeugen (110) installiert sind, über ein Benutzergerät (102) durch einen Server (103), wobei das erste Endgerät-Broadcast-Sendesignal (104) und das eine oder die mehreren Fahrzeug-Broadcast-Sendesignale (105) zumindest eines aus Standortinformationen und Zeitinformationen, die einen ersten Standort bzw. ein Fahrzeug des einen oder der mehreren Fahrzeuge (110) betreffen, umfassen;
Empfangen eines zweiten Endgerät-Broadcast-Sendesignals (106), umfassend Standortinformationen und Zeitinformationen, die einen zweiten Standort betreffen, von einer oder mehreren zweiten Sendevorrichtungen (108) über das Benutzergerät (102) durch den Server (103); und
Erzeugen einer Abfolge eines oder mehrerer Transportmodi, die von dem Benutzer (101) während einer Fahrt verwendet werden, durch den Server (103) basierend auf zumindest einem aus dem ersten Endgerät-Broadcast-Sendesignal (104), dem einen oder mehreren Fahrzeug-Broadcast-Sendesignalen (105) und dem zweiten Endgerät-Broadcast-Sendesignal (106) zum Verwalten eines Multimodus-Transports des Benutzers (101),
wobei das Erzeugen der Abfolge die folgenden Optionen umfasst:
(1) falls die Standortinformationen und die Zeitinformationen in dem ersten Endgerät-Broadcast-Sendesignal (104), dem einen oder den mehreren Fahrzeug-Broadcast-Sendesignalen (105) und dem zweiten Endgerät-Broadcast-Sendesignal (106) alle auf dem Server (103) gespeichert sind,
Korrelieren der Standortinformationen und der Zeitinformationen in dem ersten Endgerät-Broadcast-Sendesignal (104), dem einen oder den mehreren Fahrzeug-Broadcast-Sendesignalen (105) und dem zweiten Endgerät-Broadcast-Sendesignal (106); und
Erzeugen der Abfolge basierend auf der Korrelierung,
(2) falls einer aus dem zweiten Standort und dem ersten Standort nicht auf dem Server (103) gespeichert ist,
Erzeugen der Abfolge basierend auf dem einen oder den mehreren Fahrzeug-Broadcast-Sendesignalen (105) und einem aus dem ersten Endgerät-Broadcast-Sendesignal (104) und dem zweiten Endgerät-Broadcast-Sendesignal (106) und
(3) falls der erste Standort und der zweite Standort nicht auf dem Server (103) gespeichert sind,
Erzeugen der Abfolge basierend auf dem einen oder den mehreren Fahrzeug-Broadcast-Sendesignalen (105).

2. Verfahren nach Anspruch 1, wobei eine Zahlung für den Multimodus-Transport basierend auf der Abfolge nach zumindest einem aus der Angabe der Fahrt durch den Benutzer (101) und einem vordefinierten Zeitintervall, nachdem der Benutzer (101) die Fahrt abgeschlossen hat, eingeleitet wird.

3. Verfahren nach Anspruch 1, das ferner das Registrieren des Benutzers (101) am Server (103) unter Verwendung einer mobilen Anwendung (501), die dem Benutzergerät (102) zugeordnet ist, umfasst, indem:
eine Anfrage zum Registrieren am Server (103) von dem Benutzer (101) empfangen wird;
eine Zahlungsmethode des Benutzers (101) verifiziert wird;
eine eindeutige Identifikation für den Benutzer (101) erzeugt wird, um den Benutzer (101) als registrierten Benutzer zu identifizieren.

4. Verfahren nach Anspruch 1, wobei die eindeutige Identifikation des Benutzers (101) an das Benutzergerät (102) und eine Transporteinrichtung (109) übertragen wird.

5. Server (103) zum Verwalten eines Multimodus-Transports eines Benutzers (101), wobei der Server (103) Folgendes umfasst:
einen oder mehrere Prozessoren;
einen Speicher, der durch den Prozessor ausführbare Befehle speichert, die bei Ausführung davon den Prozessor veranlassen zum:
Empfangen zumindest eines aus einem ersten Endgerät-Broadcast-Sendesignal (104) und einem oder mehreren Fahrzeug-Broadcast-Sendesignalen (105) von einer oder mehreren ersten Sendevorrichtungen (107), die in zumindest einem aus einer Transporteinrichtung (109) und einem oder mehreren Fahrzeugen (110) installiert sind, über ein Benutzergerät (102), wobei das erste Endgerät-Broadcast-Sendesignal (104) und das eine oder die mehreren Fahrzeug-Broadcast-Sendesignale (105) zumindest eines aus Standortinformationen und Zeitinformationen, die einen ersten Standort bzw. ein Fahrzeug des einen oder der mehreren Fahrzeuge (110) betreffen, umfassen;
Empfangen eines zweiten Endgerät-Broadcast-Sendesignals (106), umfassend Standortinformationen und Zeitinformationen, die einen zweiten Standort betreffen, von einer oder mehreren zweiten Sendevorrichtungen (108) über das Benutzergerät (102); und
Erzeugen einer Abfolge eines oder mehrerer Transportmodi, die von dem Benutzer (101) während einer Fahrt verwendet werden, basierend auf zumindest einem aus dem ersten Endgerät-Broadcast-Sendesignal (104), dem einen oder mehreren Fahrzeug-Broadcast-Sendesignalen (105) und dem zweiten Endgerät-Broadcast-Sendesignal (106) zum Verwalten eines Multimodus-Transports des Benutzers (101),
wobei der eine oder die mehreren Prozessoren die Abfolge unter Verwendung einer der folgenden Optionen erzeugen:
(1) falls die Standortinformationen und die Zeitinformationen in dem ersten Endgerät-Broadcast-Sendesignal (104), dem einen oder den mehreren Fahrzeug-Broadcast-Sendesignalen (105) und dem zweiten Endgerät-Broadcast-Sendesignal (106) alle auf dem Server (103) gespeichert sind,
Korrelieren der Standortinformationen und der Zeitinformationen in dem ersten Endgerät-Broadcast-Sendesignal (104), dem einen oder den mehreren Fahrzeug-Broadcast-Sendesignalen (105) und dem zweiten Endgerät-Broadcast-Sendesignal (106); und
Erzeugen der Abfolge basierend auf der Korrelierung,
(2) falls einer aus dem zweiten Standort und dem ersten Standort nicht auf dem Server (103) gespeichert ist,
Erzeugen der Abfolge basierend auf dem einen oder den mehreren Fahrzeug-Broadcast-Sendesignalen (105) und einem aus dem ersten Endgerät-Broadcast-Sendesignal (104) und dem zweiten Endgerät-Broadcast-Sendesignal (106) und
(3) falls der erste Standort und der zweite Standort nicht auf dem Server (103) gespeichert sind,
Erzeugen der Abfolge basierend auf dem einen oder den mehreren Fahrzeug-Broadcast-Sendesignalen (105).

6. Server (103) nach Anspruch 5, wobei der eine oder die mehreren Prozessoren eine Zahlung für den Multimodus-Transport basierend auf der Abfolge nach zumindest einem aus einer Angabe der Fahrt durch den Benutzer (101) und einem vordefinierten Zeitabstand, nachdem der Benutzer (101) die Fahrt abgeschlossen hat, eingeleitet wird.

7. Server (103) nach Anspruch 5, wobei der eine oder die mehreren Prozessoren die eindeutige Identifikation des Benutzers (101) an das Benutzergerät (102) und die Transporteinrichtung (109) übertragen.

8. System (111) zum Verwalten des Multimodus-Transports eines Benutzers (101), wobei das System Folgendes umfasst:
eine oder mehrere erste Sendevorrichtungen (107) und eine oder mehrere zweite Sendevorrichtungen (108), die in zumindest einem aus einer Transporteinrichtung (109) und einem oder mehreren Fahrzeugen (110) installiert sind;
ein Benutzergerät (102), das einem Benutzer (101) zugeordnet ist; und
einen Server (103), der ausgelegt ist zum:
Empfangen zumindest eines aus einem ersten Endgerät-Broadcast-Sendesignal (104) und einem oder mehreren Fahrzeug-Broadcast-Sendesignalen (105) von der einen oder den mehreren ersten Sendevorrichtungen (107) über ein Benutzergerät (102), wobei das erste Endgerät-Broadcast-Sendesignal (104) und das eine oder die mehreren Fahrzeug-Broadcast-Sendesignale (105) zumindest eines aus Standortinformationen und Zeitinformationen, die einen ersten Standort bzw. ein Fahrzeug des einen oder der mehreren Fahrzeuge (110) betreffen, umfassen;
Empfangen eines zweiten Endgerät-Broadcast-Sendesignals (106), umfassend Standortinformationen und Zeitinformationen, die einen zweiten Standort betreffen, von einer oder mehreren zweiten Sendevorrichtungen (108) über das Benutzergerät (102); und
Erzeugen einer Abfolge eines oder mehrerer Transportmodi, die von dem Benutzer (101) während einer Fahrt verwendet werden, basierend auf zumindest einem aus dem ersten Endgerät-Broadcast-Sendesignal (104), dem einen oder mehreren Fahrzeug-Broadcast-Sendesignalen (105) und dem zweiten Endgerät-Broadcast-Sendesignal (106) zum Verwalten eines Multimodus-Transports des Benutzers (101),
wobei der eine oder die mehreren Prozessoren die Abfolge unter Verwendung einer der folgenden Optionen erzeugen:
(1) falls die Standortinformationen und die Zeitinformationen in dem ersten Endgerät-Broadcast-Sendesignal (104), dem einen oder den mehreren Fahrzeug-Broadcast-Sendesignalen (105) und dem zweiten Endgerät-Broadcast-Sendesignal (106) alle auf dem Server (103) gespeichert sind,
Korrelieren der Standortinformationen und der Zeitinformationen in dem ersten Endgerät-Broadcast-Sendesignal (104), dem einen oder den mehreren Fahrzeug-Broadcast-Sendesignalen (105) und dem zweiten Endgerät-Broadcast-Sendesignal (106); und
Erzeugen der Abfolge basierend auf der Korrelierung,
(2) falls einer aus dem zweiten Standort und dem ersten Standort nicht auf dem Server (103) gespeichert ist,
Erzeugen der Abfolge basierend auf dem einen oder den mehreren Fahrzeug-Broadcast-Sendesignalen (105) und einem aus dem ersten Endgerät-Broadcast-Sendesignal (104) und dem zweiten Endgerät-Broadcast-Sendesignal (106) und
(3) falls der erste Standort und der zweite Standort nicht auf dem Server (103) gespeichert sind,
Erzeugen der Abfolge basierend auf dem einen oder den mehreren Fahrzeug-Broadcast-Sendesignalen (105).

9. System (111) nach Anspruch 8, wobei die eine oder die mehreren ersten Sendevorrichtungen (107) und die eine oder die mehreren zweiten Sendevorrichtungen (108) eine aus einer Bluetooth-fähigen Vorrichtung, einer Wireless Fidelity-, WiFi-, fähigen Vorrichtung, einer Zigbee-fähigen Vorrichtung und einer Ultrabreitband-, UWB-, fähigen Vorrichtung sind.

## Revendications

1. Procédé de gestion de transport multimodal d'un utilisateur (101), le procédé comprenant les étapes consistant à :
recevoir, par l'intermédiaire d'un serveur (103) via un dispositif utilisateur (102), au moins un parmi un premier signal de diffusion de terminal (104) et un ou plusieurs signaux de diffusion de véhicule (105), à partir d'un ou plusieurs premiers dispositifs émetteurs (107) installés dans au moins un parmi une installation de transport (109) et un ou plusieurs véhicules (110), dans lequel le premier signal de diffusion de terminal (104) et les un ou plusieurs signaux de diffusion de véhicule (105) comprennent au moins certaines parmi des informations de localisation et des informations temporelles relatives à une première localisation et à un véhicule des un ou plusieurs véhicules (110), respectivement ;
recevoir, par l'intermédiaire du serveur (103) via le dispositif utilisateur (102), un second signal de diffusion de terminal (106) comprenant des informations de localisation et des information temporelles relatives à une seconde localisation, à partir d'un ou plusieurs seconds dispositifs émetteurs (108) ; et
générer, par l'intermédiaire du serveur (103), une séquence d'un ou plusieurs modes de transport utilisés par l'utilisateur (101) lors d'un voyage, sur la base d'au moins un parmi le premier signal de diffusion de terminal (104), les un ou plusieurs signaux de diffusion de véhicule (105) et le second signal de diffusion de terminal (106), pour gérer un transport multimodal de l'utilisateur (101),
dans lequel la génération de la séquence comprend les options suivantes :
(1) si les informations de localisation et les informations temporelles dans le premier signal de diffusion de terminal (104), les un ou plusieurs signaux de diffusion de véhicule (105) et le second signal de diffusion de terminal (106) sont tous sauvegardés sur le serveur (103),
corréler les informations de localisation et les informations temporelles dans le premier signal de diffusion de terminal (104), les un ou plusieurs signaux de diffusion de véhicule (105) et le second signal de diffusion de terminal (106) ; et
générer la séquence sur la base de la corrélation,
(2) si l'une de la seconde localisation et de la première localisation n'est pas sauvegardée dans le serveur (103)
générer la séquence sur la base des un ou plusieurs signaux de diffusion de véhicule (105) et de l'un du premier signal de diffusion de terminal (104) et du second signal de diffusion de terminal (106), et
(3) si la première localisation et la seconde localisation ne sont pas sauvegardées dans le serveur (103)
générer la séquence sur la base des un ou plusieurs signaux de diffusion de véhicule (105).

2. Procédé selon la revendication 1, dans lequel un paiement pour le transport multimodal est initié sur la base de la séquence, lors d'au moins un parmi une indication du voyage par l'utilisateur (101) et un intervalle de temps prédéfini après que l'utilisateur (101) ait terminé le voyage.

3. Procédé selon la revendication 1, comprenant en outre l'enregistrement de l'utilisateur (101) sur le serveur (103) à l'aide d'une application mobile (501) associée au dispositif utilisateur (102) par l'intermédiaire des étapes consistant à :
recevoir une demande de l'utilisateur (101) pour s'enregistrer sur le serveur (103) ;
vérifier un mode de paiement de l'utilisateur (101) ;
générer une identification unique pour l'utilisateur (101), afin d'identifier l'utilisateur (101) en tant qu'utilisateur enregistré.

4. Procédé selon la revendication 1, dans lequel l'identification unique de l'utilisateur (101) est transmise au dispositif utilisateur (102) et à une installation de transport (109).

5. Serveur (103) destiné à gérer le transport multimodal d'un utilisateur (101), le serveur (103) comprenant :
un ou plusieurs processeurs ;
une mémoire stockant des instructions exécutables par le processeur qui, lorsqu'elles sont exécutées, amènent les un ou plusieurs processeurs à :
recevoir, via un dispositif utilisateur (102), au moins un parmi un premier signal de diffusion de terminal (104) et un ou plusieurs signaux de diffusion de véhicule (105), à partir d'un ou plusieurs premiers dispositifs émetteurs (107) installés dans au moins un parmi une installation de transport (109) et un ou plusieurs véhicules (110), dans lequel le premier signal de diffusion de terminal (104) et les un ou plusieurs signaux de diffusion de véhicule (105) comprennent au moins certaines parmi des information de localisation et des informations temporelles relatives à une première localisation et à un véhicule des un ou plusieurs véhicules (110), respectivement ;
recevoir, via le dispositif utilisateur (102), un second signal de diffusion de terminal (106) comprenant des informations de localisation et des informations temporelles relatives à une seconde localisation, à partir d'un ou plusieurs seconds dispositifs émetteurs (108) ; et
générer une séquence d'un ou plusieurs modes de transport utilisés par l'utilisateur (101) lors d'un voyage, sur la base d'au moins un parmi le premier signal de diffusion de terminal (104), les un ou plusieurs signaux de diffusion de véhicule (105) et le second signal de diffusion de terminal (106), pour gérer un transport multimodal de l'utilisateur (101),
dans lequel les un ou plusieurs processeurs génèrent la séquence en utilisant l'une des options suivantes :
(1) si les informations de localisation et les informations temporelles dans le premier signal de diffusion de terminal (104), les un ou plusieurs signaux de diffusion de véhicule (105) et le second signal de diffusion de terminal (106) sont tous sauvegardés sur le serveur (103),
corréler les informations de localisation et les informations temporelles dans le premier signal de diffusion de terminal (104), les un ou plusieurs signaux de diffusion de véhicule (105) et le second signal de diffusion de terminal (106) ; et
générer la séquence sur la base de la corrélation,
(2) si l'une de la seconde localisation et de la première localisation n'est pas sauvegardée dans le serveur (103)
générer la séquence sur la base des un ou plusieurs signaux de diffusion de véhicule (105) et de l'un du premier signal de diffusion de terminal (104) et du second signal de diffusion de terminal (106), et
(3) si la première localisation et la seconde localisation ne sont pas sauvegardées dans le serveur (103)
générer la séquence sur la base des un ou plusieurs signaux de diffusion de véhicule (105).

6. Serveur (103) selon la revendication 5, dans lequel les un ou plusieurs processeurs initient un paiement pour le transport multimodal sur la base de la séquence, lors d'au moins un parmi une indication du voyage par l'utilisateur (101) et un intervalle de temps prédéfini après que l'utilisateur (101) ait terminé le voyage.

7. Serveur (103) selon la revendication 5, dans lequel les un ou plusieurs processeurs transmettent l'identification unique de l'utilisateur (101) au dispositif utilisateur (102) et à l'installation de transport (109).

8. Système (111) pour gérer un transport multimodal d'un utilisateur (101), le système comprenant :
un ou plusieurs premiers dispositifs émetteurs (107) et un ou plusieurs seconds dispositifs émetteurs (108) installés dans au moins un parmi une installation de transport (109) et un ou plusieurs véhicules (110) ;
un dispositif utilisateur (102) associé à un utilisateur (101) ; et
un serveur (103) configuré pour :
recevoir, via le dispositif utilisateur (102), au moins un parmi un premier signal de diffusion de terminal (104) et un ou plusieurs signaux de diffusion de véhicule (105), provenant des un ou plusieurs premiers dispositifs émetteurs (107), dans lequel le premier signal de diffusion de terminal (104) et les un ou plusieurs signaux de diffusion de véhicule (105) comprennent au moins certaines parmi des informations de localisation et des informations temporelles relatives une première localisation et à un véhicule des un ou plusieurs véhicules (110), respectivement ;
recevoir, via le dispositif utilisateur (102), un second signal de diffusion de terminal (106) comprenant des informations de localisation et des informations temporelles relatives à une seconde localisation, à partir d'un ou plusieurs seconds dispositifs émetteurs (108) ; et
générer une séquence d'un ou plusieurs modes de transport utilisés par l'utilisateur (101) lors d'un voyage, sur la base d'au moins un parmi le premier signal de diffusion de terminal (104), les un ou plusieurs signaux de diffusion de véhicule (105) et le second signal de diffusion de terminal (106), pour gérer un transport multimodal de l'utilisateur (101),
dans lequel les un ou plusieurs processeurs génèrent la séquence en utilisant l'une des options suivantes :
(1) si les informations de localisation et les informations temporelles dans le premier signal de diffusion de terminal (104), les un ou plusieurs signaux de diffusion de véhicule (105) et le second signal de diffusion de terminal (106) sont tous sauvegardés sur le serveur (103),
corréler les informations de localisation et les informations temporelles dans le premier signal de diffusion de terminal (104), les un ou plusieurs signaux de diffusion de véhicule (105) et le second signal de diffusion de terminal (106) ; et
générer la séquence sur la base de la corrélation,
(2) si l'une de la seconde localisation et de la première localisation n'est pas sauvegardée dans le serveur (103)
générer la séquence sur la base des un ou plusieurs signaux de diffusion de véhicule (105) et de l'un du premier signal de diffusion de terminal (104) et du second signal de diffusion de terminal (106), et
(3) si la première localisation et la seconde localisation ne sont pas sauvegardées dans le serveur (103)
générer la séquence sur la base des un ou plusieurs signaux de diffusion de véhicule (105).

9. Système (111) selon la revendication 8, dans lequel les un ou plusieurs premiers dispositifs émetteurs (107) et les un ou plusieurs seconds dispositifs émetteurs (108) sont l'un d'un dispositif compatible Bluetooth, d'un dispositif compatible Wireless Fidelity, Wi-Fi, d'un dispositif compatible Zigbee, et d'un dispositif compatible Ultra Large Bande, ULB.
